# EUROPÄISCHE PATENTSCHRIFT

(11) **EP 3 004 648 B1**
(45) Veröffentlichungstag und Bekanntmachung des Hinweises auf die Patenterteilung: **29.03.2017**
(21) Anmeldenummer: 14729877.2
(22) Anmeldetag: 03.06.2014
(51) Int. Cl.: F04B 49/22, F04B 49/06, F04B 13/00, F04C 14/24, G01F 1/26, G01F 15/00

(54) **ANORDNUNG UND VERFAHREN ZUM ERFASSEN EINES FÖRDERVOLUMENS UND EINES FÖRDERSTROMS EINER DISKONTINUIERLICH ARBEITENDEN PUMPE**
ASSEMBLY AND METHOD FOR DETECTING THE DELIVERY VOLUME AND THE FLOW RATE OF A RECIPROCATING PUMP
ASSEMBLAGE ET PROCÉDÉ POUR DÉTECTER LE VOLUME DE REFOULEMENT ET LE DÉBIT D'UNE POMPE À MOUVEMENT ALTERNATIF

(30) Priorität: 05.06.2013 EP 13170608
(43) Veröffentlichungstag der Anmeldung: 13.04.2016
(73) Patentinhaber: BASF SE, 67056 Ludwigshafen am Rhein (DE)
(72) Erfinder: WICHMANN, Wolf-Dieter, 17391 Neetzow (DE)
(86) Internationale Anmeldenummer: PCT/EP2014/061469
(87) Internationale Veröffentlichungsnummer: WO 2014/195305

(56) Entgegenhaltungen:
- DE-A1- 4 417 213
- US-A1- 2003 223 882
- US-A1- 2005 279 772
- US-A1- 2012 128 533

## Beschreibung

Die vorliegende Erfindung betrifft eine Anordnung zum Erfassen eines Fördervolumens und/oder eines Förderstroms. Die Anordnung umfasst eine diskontinuierlich arbeitende Pumpe, zumindest eine Auslassleitung und eine Einlassleitung und ein passives Ventil. Das Ventil ist in der Auslassleitung oder der Einlassleitung angeordnet. Es weist einen Ventilsitz und einen Ventilkopf auf, wobei in einer ersten Stellung des Ventilkopfs das Ventil geschlossen und in einer zweiten Stellung des Ventilkopfs das Ventil geöffnet ist. Die Erfindung betrifft ferner ein Entnahmesystem für ein Pflanzenschutzmittel mit einer solchen Anordnung. Außerdem betrifft die Erfindung ein Verfahren zum Dosieren eines Pflanzenschutzmittels, bei dem das Pflanzenschutzmittel mittels einer diskontinuierlich und zyklisch arbeitenden Pumpe gefördert wird und das Fördervolumen und/oder der Förderstrom der Pumpe erfasst wird.

In vielen Bereichen der Industrie und beispielsweise auch der Landwirtschaft werden vielfältige Arten von diskontinuierlich arbeitenden Pumpen, wie beispielsweise Kolbenpumpen, für verschiedene Aufgaben verwendet. Bei einigen Anwendungen ist das exakte Fördervolumen der Kolbenpumpe nicht von grundsätzlicher Bedeutung für deren Verwendung. Wenn eine Kolbenpumpe jedoch als Dosierpumpe verwendet wird, ist das genaue Erfassen des Fördervolumens oder des Förderstroms von großer Wichtigkeit. Insbesondere wenn eine diskontinuierlich arbeitende Pumpe in einem Entnahmesystem für ein Pflanzenschutzmittel eingesetzt wird, ist es sehr wichtig zu erfassen, welches Pflanzenschutzmittelvolumen ausgebracht wurde.

Es gibt vielfältige Messgeräte und Sensoren, um Volumenströme von Flüssigkeiten zu messen. Diese Messgeräte und Sensoren können das Fördervolumen und den Förderstrom von kontinuierlich arbeitenden Pumpen, wie beispielsweise Kreisel-, Flügelzellen- oder Verdrängerpumpen, genau erfassen. Eine diskontinuierlich arbeitende Pumpe erzeugt jedoch einen stark schwankenden, pulsierenden Förderstrom. Ein solcher Förderstrom lässt sich mit bekannten Messgeräten und Sensoren nicht genau messen. Es ist daher bekannt, die Pulsation eines Förderstroms, der von einer diskontinuierlich arbeitenden Pumpe erzeugt wird, zu dämpfen und zu glätten. Beispielsweise werden sogenannte Wind- oder Druckkessel eingesetzt. Nach einer solchen Dämpfung und Glättung des Förderstroms ist beispielsweise auch der Förderstrom einer Kolbenpumpe mit einem Durchflussmessgerät relativ genau messbar.

Ist jedoch bei einer diskontinuierlich arbeitenden Pumpe die Nutzung von Dämpfungs-oder Glättungsverfahren für den Förderstrom nicht oder nur eingeschränkt technisch möglich, können herkömmliche Durchflussmessgeräte nicht eingesetzt werden, um das Fördervolumen oder den Förderstrom genau zu erfassen.

Die US 2003/0223882 A1 beschreibt ein Überwachungs- und Steuersystem für den Förderstrom einer Pumpe. Bei dem System wird ein passives Ventil durch den Druck geöffnet, welcher von einem Fluid ausgeht, welches mittels der Pumpe in eine Leitung gepumpt wird. Das Öffnen des Ventils wird beispielsweise durch einen Näherungsschalter erfasst.

Ferner beschreibt die US 2012/0128533 A1 eine Vorrichtung, mit welcher Flüssigkeit durch ein passives Ventil gefördert werden kann. Der Zustand des Ventils wird dabei mittels eines Fotodetektors erfasst. Dabei kann erfasst werden, ob das Ventil fehlerfrei funktioniert.

Der vorliegenden Erfindung liegt daher die Aufgabe zugrunde, eine Anordnung, ein Entnahmesystem und Verfahren der eingangs genannten Art bereitzustellen, mit denen das Fördervolumen und/oder der Förderstrom einer diskontinuierlich arbeitenden Pumpe sehr genau erfassbar ist bzw. sind.

Erfindungsgemäß wird diese Aufgabe durch eine Anordnung mit den Merkmalen des Anspruchs 1, ein Entnahmesystem mit den Merkmalen des Anspruchs 7 und ein Verfahren mit den Merkmalen des Anspruchs 11 gelöst. Vorteilhafte Ausgestaltungen und Weiterbildungen ergeben sich aus den abhängigen Ansprüchen.

Die erfindungsgemäße Anordnung zum Erfassen eines Fördervolumens und/oder eines Förderstroms umfasst eine diskontinuierlich arbeitende Pumpe, zumindest eine Auslassleitung und eine Einlassleitung und ein passives Ventil, das in der Auslassleitung oder Einlassleitung angeordnet ist. Das Ventil weist einen Ventilsitz und einen Ventilkopf auf, wobei das Ventil in einer ersten Stellung des Ventilkopfes geschlossen und in einer zweiten Stellung des Ventilkopfes geöffnet ist. Ferner umfasst die erfindungsgemäße Anordnung einen Sensor, mit dem Werte erfassbar sind, die angeben, ob sich der Ventilkopf in der ersten oder der zweiten Stellung befindet. Ferner umfasst die erfindungsgemäße Anordnung eine Recheneinheit, welche mit dem Sensor gekoppelt ist und mit welcher das von der Pumpe geförderte Volumen und/oder der Förderstrom der Pumpe anhand der erfassten Werte des Sensors berechenbar ist bzw. sind.

Unter einer diskontinuierlich arbeitenden Pumpe wird im Sinne der Erfindung eine Pumpe verstanden, bei der die Größe des Förderstroms bauartbedingt variiert, insbesondere stark variiert. Eine solche Pumpe arbeitet impulsartig. Es wird ein pulsierender Förderstrom erzeugt. Ein Beispiel für eine solche diskontinuierlich arbeitende Pumpe ist eine Kolbenpumpe.

Unter einem passiven Ventil wird im Sinne der Erfindung ein Ventil verstanden, welches dadurch öffnet, dass auf einer Seite des Ventils eine Öffnungskraft überschritten wird. Das passive Ventil öffnet somit selbsttätig durch den Druck, den das Fluid, welches im geöffneten Zustand des Ventils durch das Ventil strömt, auf den Ventilkopf ausübt.

Der Gegensatz zu einem passiven Ventil ist ein aktiv angesteuertes Ventil, welches beispielsweise manuell oder durch einen elektrischen Impuls geöffnet wird. Das Öffnen und Schließen des Ventils erfolgt bei einem aktiven Ventil insbesondere unabhängig von dem Druck des Fluids, welches das Ventil im geöffneten Zustand durchströmt.

Der Ventilkopf des passiven Ventils liegt im geschlossenen Zustand des Ventils an dem Ventilsitz an und dichtet hierdurch das Ventil ab. Der Ventilkopf kann verschiedene Geometrien aufweisen. Beispielsweise kann der Ventilkopf als Ventilkugel oder Ventilkegel ausgebildet sein.

Das Ventil weist insbesondere eine Ventilfeder auf, welche den Ventilkopf mit einer Öffnungskraft in die erste Stellung drückt. Bei dem Ventil handelt es sich insbesondere um ein Rückschlagventil.

Das Ventil ist insbesondere in der Auslassleitung angeordnet. Umfasst die Anordnung mehrere Auslassleitungen, ist insbesondere in jeder Auslassleitung ein passives Ventil angeordnet. Die Stellung der Ventilköpfe aller Ventile wird dann von einem oder mehreren Sensoren erfasst.

Die Pumpe umfasst insbesondere ein angetriebenes Pumpenelement, mit welchem das zu fördernde Fluid in die Auslassleitung oder die Auslassleitungen gedrückt wird, so dass das geförderte Fluid den Ventilkopf oder die Ventilköpfe gegen eine Öffnungskraft des Ventils in die zweite Stellung bewegt.

Bei der erfindungsgemäßen Anordnung kann das Fördervolumen oder der Förderstrom der diskontinuierlich arbeitenden Pumpe sehr genau bestimmt werden, da keine kontinuierliche Durchflussmengenmessung erfolgt, sondern der Zustand des Ventils in der Auslassleitung oder der Einlassleitung erfasst wird. Der stark pulsierende Förderstrom beeinflusst die Stellung des Ventilkopfes insofern, als dass er den Ventilkopf in die Stellungen bringt, bei denen das Ventil geschlossen oder geöffnet ist. Diese Stellungen des Ventilkopfes stehen in einem unmittelbaren Zusammenhang mit dem Fördervolumen bzw. dem Förderstrom. Die erfassten Werte der Stellung des Ventilkopfes können daher von der Recheneinheit zur genauen Berechnung des geförderten Fluidvolumens oder des Förderstroms der Pumpe verwendet werden.

Erfindungsgemäß arbeitet die Pumpe zyklisch. Bei jedem Zyklus wird ein definiertes Fluidvolumen von der Pumpe gefördert. Zwischen zwei Zyklen befindet sich dabei der Ventilkopf in der ersten Stellung, bei der das Ventil geschlossen ist. Mittels der Recheneinheit und dem Sensor ist erfassbar, wie häufig der Ventilkopf von der ersten in die zweite Stellung wechselt. Das von der Pumpe geförderte Volumen ist dann anhand der Anzahl der Wechsel von der ersten in die zweite Stellung berechenbar.

Eine solche zyklisch arbeitende Pumpe ist insbesondere eine Kolbenpumpe. Ferner kann es sich bei der Pumpe um eine Membranpumpe handeln. Bei einer Kolbenpumpe wird pro Kolbenhub, d. h. bei jedem Zyklus, ein definiertes und durch eine Kalibrierung im Voraus erfassbares Volumen gefördert. Das Fördervolumen kann dann aus der Anzahl der Zyklen multipliziert mit dem Volumen pro Kolbenhub von der Recheneinheit berechnet werden. Die Anzahl der Zyklen ergibt sich für die Recheneinheit aus den erfassten Werten des Sensors. Aus der zeitlichen Entwicklung des geförderten Volumens kann die Recheneinheit dann auch den Förderstrom berechnen.

Erfindungsgemäß wird somit der Hub der zyklisch arbeitenden Pumpe mittels der Ventile erfasst, die ohnehin bei der Pumpe angeordnet sind.

Bei der erfindungsgemäßen Anordnung kann das Fördervolumen insbesondere einer Kolbenpumpe mit geringem technischem Aufwand und somit sehr kostengünstig erfasst werden. Des Weiteren wird das Fördervolumen sehr genau erfasst. Bei Kolbenpumpen können sich aufgrund hoher Drücke, die auf das zu fördernde Fluid ausgeübt werden, unkontrollierbare Rückströmungen in der Auslassleitung oder der Einlassleitung ergeben. Bei einem Durchflussmessgerät führen solche Rückströmungen zu Ungenauigkeiten bei der Messung des Förderstroms und entsprechend bei der Berechnung des Fördervolumens. Derartige Messungenauigkeiten werden bei der erfindungsgemäßen Anordnung vermieden, da das Fördervolumen nur auf einer Zählung in Verbindung mit einer im Voraus durchgeführten Kalibrierung bestimmt werden kann.

Bei der Kalibrierung können alle Faktoren, die Einfluss auf das Hubvolumen pro Zyklus der Pumpe haben, berücksichtigt werden. Das durchschnittliche Fördervolumen pro Kolbenhub wird während der Kalibrierung dadurch erfasst, dass die Fördermenge einer sehr großen Anzahl von Pumpenhüben aufgefangen und gemessen wird. Aus der Anzahl der Zyklen, d. h. der Anzahl der Förderhübe der Pumpe, lässt sich dann sehr genau das durchschnittliche Fördervolumen pro Kolbenhub bestimmen. Das Hubvolumen kann bei der Kalibrierung insbesondere für das zu fördernde Fluid durchgeführt werden. Nachteilige Einflüsse der positiv und negativ beschleunigten Flüssigkeitssäule beim Fördern des Fluids werden daher automatisch mit berücksichtigt.

Die später im Betrieb der Pumpe durchzuführende Zählung der Zyklen der Pumpe unterliegt keinen Messungenauigkeiten. Das von der Pumpe geförderte Volumen kann somit mit der Genauigkeit der vorherigen Kalibrierung erfasst werden. Auf diese Weise kann das Fördervolumen und der Förderstrom einer zyklisch arbeitenden Pumpe, insbesondere einer Kolbenpumpe, sehr genau erfasst werden.

Da der Sensor im einfachsten Fall nur die beiden Stellungen des Ventilkopfes erfassen muss, kann es sich bei dem Sensor um einen einfachen Schalter handeln, der bei einem Wechsel der Stellung des Ventilkopfes geöffnet bzw. geschlossen wird. In der Recheneinheit muss dann nur die Häufigkeit des Schalterwechsels gezählt werden. Hieraus kann die Recheneinheit das Fördervolumen berechnen. Die erfindungsgemäße Anordnung kann somit sehr einfach und kostengünstig realisiert werden.

Gemäß einer Weiterbildung der erfindungsgemäßen Anordnung wird die Pumpe hydraulisch angetrieben. Bei einer diskontinuierlich arbeitenden, hydraulisch angetriebenen Pumpe ergibt sich das Problem, dass das geförderte Fluid sehr stark beschleunigt und anschließend ebenso stark wieder abgebremst wird. Solche starken positiven und negativen Beschleunigungen treten insbesondere bei hydraulisch angetriebenen Kolbenpumpen auf. Diese relativ schnell abwechselnd aufeinanderfolgenden Phasen von positiver und negativer Beschleunigung der geförderten Fluidsäule machen eine genaue Erfassung und Messung des Fördervolumens oder des Förderstroms mit bekannten Durchflussmengen-Messverfahren technisch sehr aufwändig und schwierig. Durch die Trägheit der geförderten, positiv und negativ beschleunigten Fluidsäule, treten nämlich ungewollte und nicht definierbare Rückströmungen der Fluidsäule auf. Diese Rückströmungen werden von Gaspartikeln, die im Fluid mehr oder weniger vorhanden sind, sowie gegebenenfalls von elastischen Dichtelementen der Pumpe verursacht. Die Gaspartikel und/oder die elastischen Dichtelemente werden bei positiver Beschleunigung der Fluidsäule komprimiert und bei deren negativer Beschleunigung wieder dekomprimiert. Die Dekompression ist die Ursache dieser unkontrollierbaren Rückströmungen.

Mittels der erfindungsgemäßen Anordnung ist es möglich, stark pulsierende Förderströme von Kolbenpumpen auch dann genau zu erfassen, wenn diese Kolbendosierpumpen hydraulisch direkt angetrieben werden.

Die erfindungsgemäße Anordnung umfasst eine Prüfeinrichtung, die mit der Pumpe und dem Sensor gekoppelt ist. Mit der Prüfeinrichtung kann geprüft werden, ob innerhalb eines definierten Zeitintervalls nach dem Ende eines Zyklus der Ventilkopf von der ersten Stellung in die zweite Stellung gewechselt hat.

Die erfindungsgemäße Anordnung ist dadurch gekennzeichnet, dass die Recheneinheit einen Speicher umfasst, in dem ein Ausgangsvolumen in einem mit der Einlassleitung verbundenen Behälter gespeichert ist. Die Recheneinheit ist eingerichtet, ein Restvolumen in dem Behälter zu berechnen, welches von einer Anzeigevorrichtung ausgebbar ist.

Die Prüfeinrichtung ist erfindungsgemäß eingerichtet, zu prüfen, ob eine Fehlfunktion der Pumpe oder ein Leerstand des Behälters vorliegt, aus welchem das Fluid gefördert wird. Wenn nämlich der Ventilkopf in einem Zyklus oder unmittelbar danach nicht von der ersten Stellung in die zweite Stellung gewechselt hat, ist es möglich, dass Luft statt das Fluid angesaugt wurde. In diesem Fall reicht der durch Kompression erzeugte Luftdruck nicht aus, das Ventil zu öffnen. Die Pumpe komprimiert und dekomprimiert dann nur die Luft, ohne dass sich das Ventil öffnet.

In einer Weiterbildung der erfindungsgemäßen Anordnung ist mit dem Sensor in der zweiten Stellung des Ventilkopfes die Position des Ventilkopfes relativ zum Ventilsitz erfassbar. Von dem Sensor wird somit erfasst, wie weit das Ventil geöffnet ist. Hierdurch ist es möglich, die Größe des Förderstroms noch genauer und insbesondere mit einer noch höheren Zeitauflösung zu bestimmen.

Der Sensor ist diesem Fall insbesondere ein Abstandssensor, mit dem der Abstand des Ventilkopfes zu einem Bezugspunkt erfassbar ist. Der Bezugspunkt ist dabei ortsfest, zumindest jedoch in gleichbleibender geometrischer Lage zu dem Ventilsitz. Aus dem Abstand des Ventilkopfes zu einem Bezugspunkt lässt sich somit die Position des Ventilkopfes relativ zum Ventilsitz ermitteln. Derartige Abstandssensoren sind sehr kostengünstig, so dass die erfindungsgemäße Anordnung auf diese Weise sehr kostengünstig herstellbar ist. Ferner lässt sich mit einem Abstandssensor der Abstand des Ventilkopfes zu dem Bezugspunkt sehr genau erfassen. Da dieser Abstand in einem eindeutigen Zusammenhang zu dem Durchflussquerschnitt des geöffneten Ventils in der zweiten Stellung des Ventilkopfes steht, kann die Recheneinheit auf diese Weise sehr genau den Förderstrom berechnen.

Gemäß einer anderen Ausgestaltung der erfindungsgemäßen Anordnung ist der Sensor ein Bewegungssensor, mit dem eine Bewegung des Ventilkopfes erfassbar ist. Auf diese Weise lässt sich ein Stellungswechsel des Ventilkopfes sehr verlässlich und einfach erfassen.

Die Recheneinheit ist bei einer Weiterbildung insbesondere mit dem Speicher oder einem weiteren Speicher gekoppelt, in welchem Kalibrierungsdaten gespeichert sind, die den Förderstrom durch das Ventil in Abhängigkeit von der Position des Ventilkopfes relativ zum Ventilsitz angeben. Mit der Recheneinheit sind in diesem Fall anhand der kontinuierlich vom Sensor erfassten Position des Ventilkopfes und anhand der Kalibrierungsdaten das von der Pumpe geförderte Fluidvolumen und/oder der Förderstrom der Pumpe berechenbar. In diesem Fall kann das Fördervolumen und der Förderstrom kontinuierlich sehr genau erfasst werden. Ferner ist bei zyklisch arbeitenden Pumpen der Förderstrom auch innerhalb eines Zyklus genau erfassbar.

Bevorzugt wird mittels der Recheneinheit ein Hinweis auf einen Leerstand von einer Anzeigevorrichtung angezeigt, wenn das Restvolumen unterhalb einem definierten Grenzwert liegt.

Die Erfindung betrifft des Weiteren ein Entnahmesystem für ein Pflanzenschutzmittel. Das Entnahmesystem umfasst einen Behälter, der eine Behälterwand und eine Entnahmeöffnung aufweist, wobei die Behälterwand einen Innenraum zur Aufnahme des Pflanzenschutzmittels umschließt. Das Entnahmesystem umfasst des Weiteren die vorstehend beschriebene Anordnung zum Erfassen eines Fördervolumens und/oder eines Förderstroms, wobei die diskontinuierlich arbeitende Pumpe so mit dem Behälter gekoppelt ist, dass mittels der Einlassleitung der Pumpe im Behälter befindliches Pflanzenschutzmittel durch die Pumpe zur Auslassleitung der Pumpe gefördert wird. Ferner sind der Sensor und die Recheneinheit in einer externen Einheit angeordnet. Der Behälter weist einen ersten Anschluss für die Kopplung des Sensors mit dem Ventil der Pumpe zum Erfassen der Stellung des Ventilkopfes auf.

Die diskontinuierlich arbeitende Pumpe kann z. B. so im Innenraum des Behälters angeordnet sein, dass mittels der Einlassleitung der Pumpe im Behälter befindliches Pflanzenschutzmittel durch die Pumpe über die Auslassleitung der Pumpe zur Entnahmeöffnung des Behälters gefördert wird.

Gemäß einer anderen Ausgestaltung ist die diskontinuierlich arbeitende Pumpe außen an dem Behälter befestigt. Die Behälterwand kann z. B. eine Aussparung bilden, in welche die Pumpe von außen eingesetzt ist.

Das erfindungsgemäße Entnahmesystem ist somit in zwei getrennte Komponenten aufgeteilt: Die erste Komponente umfasst den Behälter mit der Pumpe und dem Ventil. Die zweite Komponente umfasst den Sensor und die Recheneinheit. Beide Komponenten lassen sich über den ersten Anschluss des Behälters miteinander koppeln, so dass das von der Pumpe, die sich innerhalb des Behälters befindet, geförderte Volumen von außen genau bestimmen lässt. Dem Nutzer kann auf diese Weise angezeigt werden, wie viel Pflanzenschutzmittel ausgebracht wurde oder, wenn bekannt ist, wie viel Pflanzenschutzmittel sich ursprünglich Behälter befand, kann die Restmenge an Pflanzenschutzmittel angezeigt werden.

Gemäß einer Weiterbildung des Entnahmesystems weist die externe Einheit ferner eine Steuervorrichtung auf. Der Behälter weist dann einen zweiten Anschluss für die Kopplung der Steuervorrichtung mit der Pumpe zum Steuern der Pumpe auf. Die Steuervorrichtung kann ferner mit der Recheneinheit gekoppelt werden, so dass mittels der externen Einheit die Förderung des Pflanzenschutzmittels aus dem Entnahmesystem überwacht und gesteuert werden kann.

Gemäß einem weiteren Ausführungsbeispiel des erfindungsgemäßen Entnahmesystems umfasst dieses mehrere Behälter, die jeweils eine Pumpe umfassen. In diesem Fall kann das Entnahmesystem zusätzlich eine Wechseleinrichtung aufweisen, mittels welcher automatisch die Kopplung des Sensors mit dem ersten Anschluss und ggf. die Kopplung der Steuervorrichtung bzw. einer Antriebseinheit mit dem zweiten Anschluss von dem ersten Behälter gelöst und mit entsprechenden Anschlüssen eines weiteren Behälters gekoppelt werden kann. Alternativ sind bereits der Sensor und die Steuervorrichtung bzw. die Antriebseinheit mit den jeweiligen Anschlüssen aller Behälter des Entnahmesystems gekoppelt. Die Wechseleinrichtung kann dann eine Umschaltung zwischen den Behältern durchführen.

Die Erfindung betrifft des Weiteren ein Verfahren zum Dosieren eines Pflanzenschutzmittels, bei dem das Pflanzenschutzmittel mittels einer diskontinuierlich und zyklisch arbeitenden Pumpe gefördert wird und das Fördervolumen und/oder der Förderstrom der Pumpe erfasst wird. Bei dem Verfahren wird ein Pumpenelement angetrieben, wodurch das Pflanzenschutzmittel aus einem Behälter heraus gefördert wird, wobei das geförderte Pflanzenschutzmittel ein passives Ventil, das in einer Auslassleitung und/oder einer Einlassleitung angeordnet ist, gegen eine Öffnungskraft des Ventils öffnet, indem ein Ventilkopf relativ zu einem Ventilsitz von einer ersten Stellung in eine zweite Stellung bewegt wird. Bei dem erfindungsgemäßen Verfahren wird von der Pumpe bei jedem Zyklus ein definiertes Pflanzenschutzmittelvolumen gefördert, wobei sich der Ventilkopf zwischen zwei Zyklen in der ersten Stellung befindet, bei der das Ventil geschlossen ist. Dabei wird erfasst, wie häufig der Ventilkopf von der ersten Stellung in die zweite Stellung wechselt und das von der Pumpe geförderte Volumen wird anhand der Anzahl der Wechsel von der ersten in die zweite Stellung berechnet.

Auf diese Weise kann insbesondere sehr genau das Fördervolumen einer Kolbenpumpe erfasst werden. Ein Wechsel von der ersten in die zweite Stellung kann z. B. mittels eines Bewegungssensors erfasst werden.

Das erfindungsgemäße Verfahren ist dadurch gekennzeichnet, dass geprüft wird, ob innerhalb eines definierten Zeitintervalls nach dem Ende eines Zyklus der Ventilkopf von der ersten Stellung in die zweite Stellung gewechselt hat. Wenn innerhalb des Zeitintervalls nach dem Ende eines Zyklus der Ventilkopf nicht von der ersten Stellung in die zweite Stellung gewechselt hat, wird eine Förderfehlfunktion erfasst. Diese Förderfehlfunktion kann insbesondere durch einen Leerstand eines Behälters verursacht worden sein, aus dem das Fluid gefördert wird. Dies kann auf diese Weise von dem erfindungsgemäßen Verfahrens erfasst werden.

Bei dem erfindungsgemäßen Verfahren wird das Ausgangsvolumen des Pflanzenschutzmittels in einem Behälter erfasst. Das Restvolumen des Pflanzenschutzmittels in dem Behälter wird berechnet und gespeichert. Es wird geprüft, ob die Förderfehlfunktion eine Fehlfunktion der Pumpe oder ein Leerstand des Behälters ist.

Das erfindungsgemäße Verfahren kann insbesondere von der erfindungsgemäßen Anordnung ausgeführt werden. Es weist somit dieselben Vorteile wie die erfindungsgemäße Anordnung auf.

Gemäß einer Ausgestaltung des erfindungsgemäßen Verfahrens wird in der zweiten Stellung des Ventilkopfes die Position des Ventilkopfes relativ zum Ventilsitz erfasst. In diesem Fall kann insbesondere das von der Pumpe geförderte Volumen und/oder der Förderstrom der Pumpe anhand von Kalibrierungsdaten, die den Förderstrom durch das Ventil in Abhängigkeit von der Position des Ventilkopfes relativ zum Ventilsitz angeben, und anhand der kontinuierlich erfassten Position des Ventilkopfes berechnet werden.

Gemäß einer Ausgestaltung des Verfahrens wird ein Hinweis auf einen Leerstand des Behälters ausgegeben, wenn das Restvolumen unterhalb eines definierten Grenzwertes liegt und eine Förderfehlfunktion erfasst worden ist, weil z. B. ein Leerstand des Behälters vorliegt. Des Weiteren kann ein Hinweis auf eine Fehlfunktion ausgegeben werden, wenn das Restvolumen nicht unterhalb des definierten Grenzwertes liegt und dennoch eine Förderfehlfunktion erfasst worden ist.

Wenn ein Leerstand des Behälters erfasst worden ist, kann die Pumpe abgeschaltet werden und auf einen anderen, vollen Behälter umgeschaltet werden. Dieser andere Behälter kann in diesem Fall von dem Entnahmesystem umfasst sein. Anschließend wird das Pflanzenschutzmittel aus dem anderen Behälter gefördert.

Vorteilhaft an diesem Verfahren ist, dass das Pflanzenschutzmittel im Wesentlichen unterbrechungsfrei entnommen werden kann, selbst wenn die entnommene Menge größer als die Menge ist, die von einem Behälter aufgenommen werden kann. Nach Abschluss der Entnahme kann der leere Behälter ersetzt werden. Der andere Behälter, der ggf. noch eine Restmenge enthält, kann im Entnahmesystem verbleiben.

Die Erfindung wird nun anhand von Ausführungsbeispielen mit Bezug zu den Zeichnungen erläutert.
- Figur 1: zeigt den prinzipiellen Aufbau eines Ausführungsbeispiels der erfindungs-gemäßen Anordnung,
- Figur 2: zeigt eine Detailansicht der Pumpe und des Sensors von Ausführungsbei-spielen der erfindungsgemäßen Anordnung und
- Figur 3: zeigt ein Ausführungsbeispiel des erfindungsgemäßen Entnahmesystems, welches ein Ausführungsbeispiel der erfindungsgemäßen Anordnung verwendet.

Die Anordnung weist eine diskontinuierlich arbeitende Pumpe 1 auf. Bei einem Ausführungsbeispiel der erfindungsgemäßen Anordnung ist diese Pumpe 1 als Kolbenpumpe ausgebildet. Auf der Ansaugseite der Pumpe 1 ist eine Einlassleitung 2 oder Ansaugleitung und auf der Förderseite der Pumpe 1 eine Auslassleitung 3 angeordnet. Im Betrieb der Pumpe 1 wird das zu fördernde Fluid aus der Einlassleitung 2 angesaugt und durch die Pumpe 1 in die Auslassleitung 3 gefördert.

In der Einlassleitung 2 ist ein passives Ventil 4, welches als Rückschlagventil ausgebildet ist, angeordnet. Von der Pumpe 1 wird ein Ansaugdruck erzeugt, durch welchen das Ventil 4 geöffnet wird. Gleichermaßen ist in der Auslassleitung 3 ein Ventil 5 angeordnet, welches auch als Rückschlagventil ausgebildet ist. Die Pumpe 1 erzeugt im Betrieb in der Auslassleitung einen Fluiddruck, welcher das Ventil 5 öffnet. Die Einlassleitung 2 ist mit einem Behälter 6 zur Aufnahme des zu fördernden Fluids verbunden. Die Auslassleitung 3 mündet in eine Dosierleitung. Ein solches Entnahmesystem ist an sich bekannt.

Im Betrieb der Pumpe 1 wird somit Fluid aus dem Behälter 6 angesaugt und durch die Einlassleitung und die Pumpe 1 in die Auslassleitung 3 gefördert.

Zum Erfassen des Fördervolumens und des Förderstroms weist die Anordnung einen Sensor 8 auf, mit dem erfassbar ist, ob sich das Ventil 5 in einem geschlossenen oder einem geöffneten Zustand befindet. Die Kopplung des Sensors 8 mit dem Ventil 5 wird später im Detail erläutert.

Der Sensor 8 ist mit einer Recheneinheit 9 gekoppelt. Der Sensor 8 überträgt kontinuierlich Werte zum Zustand des Ventils 5 anhand von Daten an die Recheneinheit 9. Die Recheneinheit 9 berechnet mittels der von dem Sensor 8 erfassten Werte das von der Pumpe 1 geförderte Volumen sowie gegebenenfalls den Förderstrom, welcher von der Pumpe 1 erzeugt wird. Für diese Berechnung greift die Recheneinheit 9 auf Daten zu, die von einem Speicher 10 gespeichert werden. Die Art und Weise, wie die Recheneinheit 9 das Fördervolumen bzw. den Förderstrom berechnet, wird später im Detail erläutert.

In dem Speicher 10 oder einem weiteren Speicher ist außerdem das Ausgangsvolumen eines Fluids gespeichert, so dass mit der Recheneinheit 9 das geförderte Volumen und/oder ein Restvolumen berechenbar sind.

Die Recheneinheit 9 ist ferner mit einer Anzeigevorrichtung 11 verbunden, mittels welcher das aus dem Behälter 6 heraus geförderte Volumen, der momentane Förderstrom, die Restmenge des in dem Behälter 6 befindlichen Fluids, ein Hinweis auf einen Leerstand und/oder eine Förderfehlfunktion angezeigt werden können.

Des Weiteren ist eine Steuervorrichtung 7 vorgesehen, welche mit der Recheneinheit 9 und der Pumpe 1 gekoppelt ist. Die Recheneinheit 9 überträgt an die Steuervorrichtung 7 das ab einem Ausgangszeitpunkt geförderte Volumen sowie den Förderstrom der Pumpe 1. Die Steuervorrichtung 7 steuert den Antrieb der Pumpe 1 gegebenenfalls unter Berücksichtigung der von der Recheneinheit 9 übertragenen Daten.

In die Steuervorrichtung 7 ist ferner eine Prüfeinrichtung integriert. Sie ist mit der Pumpe 1 und dem Sensor 8 gekoppelt. Mit der Prüfeinrichtung kann geprüft werden, ob eine Fehlfunktion z. B. der Pumpe 1 vorliegt oder kein Fluid mehr gefördert wird, wie es später erläutert wird, weil z. B. ein Leerstand eines Behälters vorliegt, aus welchem das Fluid gefördert wird.

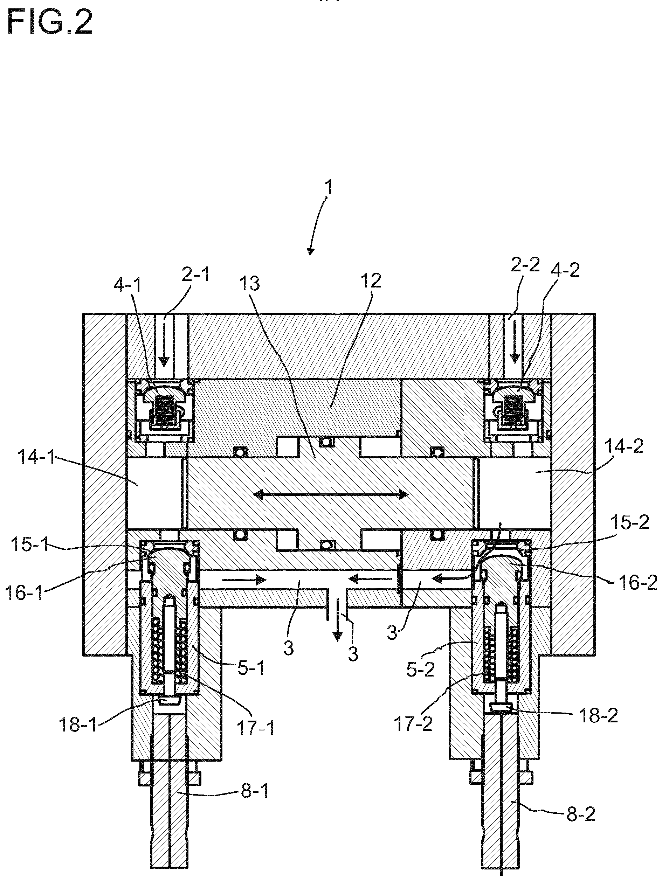

Mit Bezug zu Fig. 2 wird im Folgenden das Ausführungsbeispiel der Anordnung weiter im Detail erläutert:
Die Pumpe 1 ist in diesem Fall als Pendelkolbenpumpe ausgebildet. Sie umfasst ein Gehäuse 12, welches einen Pendelkolben 13 so aufnimmt, dass eine erste Förderkammer 14-1 und eine zweite Förderkammer 14-2 in einem zylindrischen Hohlraum gebildet sind. Der Pendelkolben 13 kann auf beliebige Weise angetrieben werden, beispielsweise durch einen elektrischen, pneumatischen oder hydraulischen Antrieb. Im Betrieb wird der Pendelkolben 13 zwischen einer ersten Stellung, bei der er sich bei der Darstellung gemäß Figur 2 auf der linken Seite befindet, und einer zweiten Stellung, bei der er sich bei der Darstellung gemäß Figur 2 auf der rechten Seite befindet, hin und her bewegt. Bei der Bewegung von der ersten in die zweite Stellung wird dabei das Volumen der ersten Förderkammer 14-1 vergrößert und gleichzeitig das Volumen der zweiten Förderkammer 14-2 verkleinert. Umgekehrt wird bei der Bewegung des Pendelkolbens 13 von der zweiten Stellung in die erste Stellung das Volumen der ersten Förderkammer 14-1 verkleinert und das Volumen der zweiten Förderkammer 14-2 vergrößert.

Im Betrieb der Pumpe wird somit bei der angetriebenen Bewegung des Pendelkolbens 13 von der ersten Stellung in die zweite Stellung Fluid durch eine erste Einlassleitung 2-1 und durch ein erstes Einlassventil 4-1, welches durch den Ansaugdruck geöffnet wird, in die erste Förderkammer 14-1 angesaugt. Das der ersten Förderkammer 14-1 zugeordnete erste Auslassventil 5-1 ist in diesem Fall geschlossen. Gleichzeitig wird das in der zweiten Förderkammer 14-2 befindliche Fluid in die Auslassleitung 3 gedrückt, wodurch das zweite Auslassventil 5-2 geöffnet wird. Ein zweites Einlassventil 4-2 in einer zweiten Einlassleitung 2-2, die in die zweite Förderkammer 14-2 mündest, ist in diesem Fall geschlossen. Bewegt sich der Pendelkolben 13 in die andere Richtung, wird Fluid über die zweite Einlassleitung 2-2 in die zweite Förderkammer 14-2 angesaugt und aus der ersten Förderkammer 14-1 über das geöffnete erste Auslassventil 5-1 in die Auslassleitung 3 herausgefördert. Auf diese Weise wird von der Pumpe 1 ein stark pulsierender Förderstrom in der Auslassleitung 3 erzeugt.

Die beiden Auslassventile 5-1, 5-2 sind als Rückschlagventile ausgebildet, die einen Ventilsitz 15-1, 15-2 und einen Ventilkopf 16-1, 16-2 aufweisen. Ferner weisen die beiden Auslassventile 5-1, 5-2 jeweils eine Ventilfeder 17-1, 17-2 auf. Diese Feder 17-1, 17-2 übt auf den jeweiligen Ventilkopf 16-1, 16-2 eine Kraft aus, die den Ventilkopf 16-1, 16-2 auf den jeweiligen Ventilsitz 15-1, 15-2 drückt. In diesem Zustand ist das Ventil 5-1, 5-2 geschlossen und der Ventilkopf 16-1, 16-2 befindet sich in einer ersten Stellung. Wenn nun von dem zu fördernden Fluid ein Druck auf den Ventilkopfkopf 16-1, 16-2 ausgeübt wird, welcher den Öffnungsdruck des jeweiligen Ventils 5-1, 5-2 übersteigt, öffnet das Ventil 5-1, 5-2 automatisch, wobei der Ventilkopf 16-1, 16-2 von dem Ventilsitz 15-1, 15-2 weg bewegt wird. Wenn das Ventil 5-1, 5-2 geöffnet ist, befindet sich der Ventilkopf 16-1, 16-2 in einer zweiten Stellung.

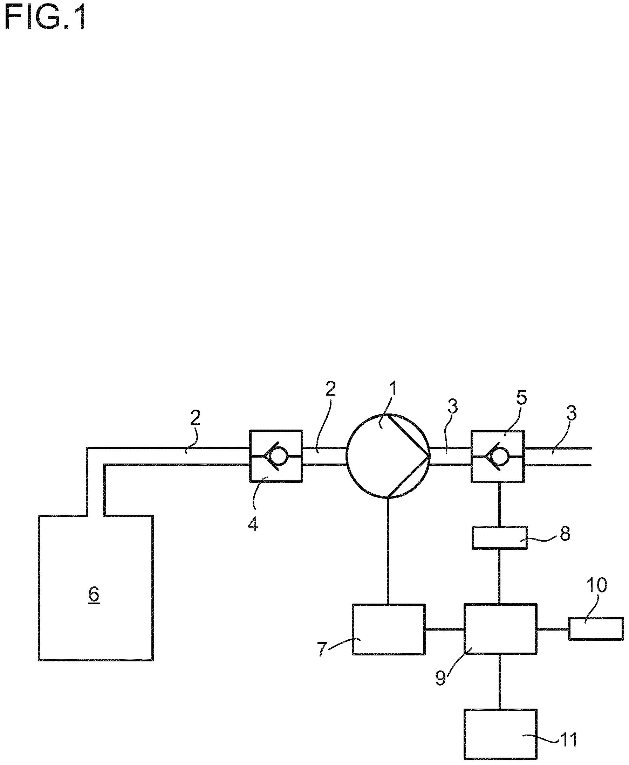

Für die beiden Auslassventile 5-1, 5-2 sind jeweils die Sensoren 8-1, 8-2 vorgesehen. Im Folgenden wird die Funktion der Sensoren 8-1, 8-2 bzw. des Sensors 8 der Fig. 1 anhand des Sensors 8-1 für das Auslassventil 5-1 erläutert:
Das Auslassventil 5-1 umfasst eine Einstellschraube 18-1, welche zunächst justiert wird und danach arretiert wird. Der Kopf der Einstellschraube 18-1 bewegt sich mit dem Ventilkopf 16-1.

In einem Ausführungsbeispiel ist der Sensor 8-1 als Schalter ausgebildet. Wenn sich der Ventilkopf 16-1 in der ersten Stellung befindet, bei der das Auslassventil 5-1 geschlossen ist, ist der Sensor 8-1 beabstandet von der Einstellschraube 18-1. Wenn sich der Ventilkopf 16-1 in der zweiten Stellung befindet, bei der das Auslassventil 5-1 geöffnet ist, kontaktiert der Kopf der Einstellschraube 18-1 den Sensor 8-1, wie dies in Figur 2 bei dem entsprechenden Sensor 8-2 gezeigt ist. Diese Kontaktierung der Einstellschraube 18-1 wird von dem Sensor 8-1 erfasst und an die Recheneinheit 9 auf an sich bekannte Weise übertragen. Wenn sich der Ventilkopf 16-1 wieder in die erste Stellung bewegt, wird die Kontaktierung der Einstellschraube 18-1 gelöst. Auch dies wird von dem Sensor 8-1 erfasst und auf an sich bekannte Weise an die Recheneinheit 9 übertragen. Entsprechend überträgt der Sensor 8-2 die Stellung des Ventilkopfes 16-2 und entsprechend den Zustand des Auslassventils 5-2 an die Recheneinheit 9.

Die Sensoren 8-1, 8-2 sind somit als einfache Schalter ausgebildet. Alternativ könnte die Stellung der Stellschrauben 18-1, 18-2 und damit der Ventilköpfe 16-1, 16-2 auch kapazitiv erfasst werden.

In der einfachsten Ausgestaltung zählt die Recheneinheit 9, wie häufig der Ventilkopf 16-1 und der Ventilkopf 16-2 von der ersten Stellung in die zweite Stellung bewegt worden ist. Bei jeder Öffnung des Auslassventils 15-1 wurde das Maximalvolumen der ersten Förderkammer 14-1 in die Auslassleitung 3 gefördert. Das Maximalvolumen der ersten Förderkammer 14-1 ist das Volumen der Förderkammer 14-1, wenn sich der Pendelkolben 13 in der zweiten Stellung befindet, das heißt bei der Darstellung gemäß Figur 2 auf der rechten Seite am Umkehrpunkt. Der Wert dieses Maximalvolumens ist in dem Speicher 10 gespeichert. Das Fördervolumen, welches über die erste Förderkammer 14-1 gefördert wurde, ergibt sich für die Recheneinheit 9 somit aus der Anzahl der Wechsel des Ventilkopfes 16-1 von der ersten Stellung in die zweite Stellung multipliziert mit dem Maximalvolumen der ersten Förderkammer 14-1. Entsprechend ist der Wert des Maximalvolumens der zweiten Förderkammer 14-2 in dem Speicher 10 gespeichert. Das über die zweite Förderkammer 14-2 geförderte Volumen ergibt sich somit aus der Anzahl der Wechsel des Ventilkopfes 16-2 von der ersten Stellung in die zweite Stellung multipliziert mit dem Maximalvolumen der zweiten Förderkammer 14-2. Addiert die Recheneinheit 9 das über die erste Förderkammer 14-1 und das über die zweite Förderkammer 14-2 geförderte Volumen, ergibt sich das Fördervolumen der gesamten Anordnung. Wird das Zeitintervall berücksichtigt, in dem dieses Fördervolumen gefördert wurde, kann der entsprechende Förderstrom berechnet werden.

Das Maximalvolumen der Förderkammer 14-1 bzw. 14-2 entspricht dem Fördervolumen pro Kolbenhub für die jeweilige Förderkammer 14-1, 14-2. Dieses Fördervolumen pro Kolbenhub wird vor Inbetriebnahme der Anordnung mittels einer Kalibrierung ermittelt. Hierfür wird mittels der Pumpe 1 das Fluid, mit welchem die Anordnung später betrieben werden soll, gefördert. Dabei wird erfasst, wie häufig sich der Pendelkolben hin und her bewegt und wie häufig entsprechend die Ventilköpfe 16-1, 16-2 von der ersten Stellung in die zweite Stellung bewegt werden. Das auf diese Weise in die Auslassleitung 3 geförderte Fluid wird getrennt für die beiden Förderkammern 14-1, 14-2 aufgefangen und das Volumen exakt bestimmt. Aus dem Volumen und der Anzahl der Zustandwechsel der Ventilköpfe 16-1, 16-2 kann dann für die beiden Förderkammern 14-1, 14-2 das Fördervolumen pro Kolbenhub bzw. das jeweilige Maximalvolumen berechnet werden. Diese Kalibrierungsdaten werden in dem Speicher 10 gespeichert.

Bei einem anderen Ausführungsbeispiel ist der Sensor 8 bzw. sind die Sensoren 8-1 und 8-2 nicht als einfache Schalter ausgebildet sondern als Bewegungssensoren. Die Bewegungssensoren 8-1 und 8-2 erfassen dann eine Bewegung des Ventilkopfes 16-1 bzw. 16-2. Die Die Bewegungssensoren 8-1 und 8-2 geben beispielsweise ein Signal aus eine Bewegung des Ventilkopfes 16-1 bzw. 16-2 erfasst wurde, nachdem diese sich vorher in Ruhe befanden.

Bei einem anderen Ausführungsbeispiel ist der Sensor 8 bzw. sind die Sensoren 8-1 und 8-2 nicht als einfache Schalter ausgebildet sondern als Abstandssensoren. Die Abstandssensoren 8-1 und 8-2 erfassen den Abstand der Stirnfläche der Einstellschraube 18-1 bzw. 18-2 zu einem ortsfesten Bezugspunkt in dem Abstandssensor 18-1 bzw. 18-2. Der ersten Stellung des Ventilkopfes 16-1 bzw. 16-2 ist ein definierter Abstandswert zugeordnet, der in den Speicher 10 gespeichert ist. Wird dieser Abstandswert von dem Sensor 8-1 bzw. 8-2 an die Recheneinheit 9 übertragen, erkennt die Recheneinheit 9, dass sich das jeweilige Ventil 5-1 bzw. 5-2 in einem geschlossenen Zustand befindet. Wenn nun beispielsweise das Auslassventil 5-1 beim Fördern von Fluid aus der ersten Förderkammer 14-1 heraus geöffnet wird und der Ventilkopf 16-1 auf den Sensor 8-1 zu bewegt wird, verkleinert sich der Abstand des Bezugspunktes des Abstandssensors 8-1 von der Stirnfläche der Einstellschraube 18-1. Eine solche Verkleinerung des Abstands wird von dem Sensor 8-1 an die Recheneinheit 9 übertragen, welche diese Veränderung des Abstandes als Wechsel von der ersten Stellung des Ventilkopfes 16-1 in die zweite Stellung des Ventilkopfes 16-1 erfasst.

Über den Abstand der Stirnfläche der Einstellschraube 18-1 von dem Bezugspunkt des Abstandssensors 8-1 erfasst die Recheneinheit 9 jedoch auch kontinuierlich die Position des Ventilkopfes 16-1 relativ zu dem Ventilsitz 15-1. Es wird somit der Öffnungshub des Auslassventils 5-1 erfasst. Dieser Öffnungshub des Auslassventils 5-1 steht in direktem Zusammenhang mit dem Durchflussquerschnitt des geöffneten Auslassventils 5-1. Bei einem vorgegebenen Druck des Fluids, welches das Auslassventil 5-1 durchströmt, steht der Durchflussquerschnitt des Ventils 5-1 wiederum direkt in einem Zusammenhang mit dem momentanen Förderstrom durch das Auslassventil 5-1.

Der Zusammenhang zwischen dem Abstand der Stirnfläche der Einstellschraube 18-1 und dem Bezugspunkt des Abstandssensors 8-1 zu dem Förderstrom durch das Auslassventil 5-1 wird über eine Kalibrierung ermittelt. Die Kalibrierungsdaten dieser vorab durchgeführten Kalibrierung werden anhand einer Kennlinie in dem Speicher 10 gespeichert. Auf diese Weise kann im Betrieb der Pumpe 1 die Recheneinheit 9 anhand des vom Abstandssensor 8-1 erfassten Abstands der Stirnfläche der Einstellschraube 18-1 zu dem Bezugspunkt des Abstandssensors 8-1 den momentanen Förderstrom durch das Auslassventil 5-1 berechnen. Aus der zeitlichen Entwicklung des kontinuierlich erfassten Förderstroms kann die Recheneinheit 9 das innerhalb eines Zeitintervalls geförderte Volumen berechnen.

Auf die gleiche Weise kann die Recheneinheit 9 das Fördervolumen durch das Auslassventil 5-2 anhand der Abstandswerte berechnen, die von dem gleichartigen Abstandssensor 8-2 übermittelt worden sind.

Gemäß einem anderen Ausführungsbeispiel ist der Sensor 8 bzw. sind die Sensoren 8-1 und 8-2 beim Einlassventil 4 bzw. den Einlassventilen 4-1 und 4-2 angeordnet. Wie bei dem Auslassventil 5, 5-1, 5-2 messen sie in diesem Fall die Stellung und/oder die Position des jeweiligen Ventilkopfes der Einlassventile 4, 4-1 bzw. 4-2. Bevorzugt sind die Sensoren 8, 8-1, 8-2 jedoch den Auslassventilen 5, 5-1, 5-2 zugeordnet. Der Ansaugdruck, der ein Öffnen der Einlassventile 4, 4-1, 4-2 bewirkt, ist nämlich niedrig, beispielsweise etwa 0,8 bar. Die Druckdifferenz, welche zum Öffnen der Auslassventile 5, 5-1, 5-2 führt, beträgt jedoch in Abhängigkeit vom Förderdruck der Pumpe 1 zumeist ein Vielfaches des Ansaugunterdrucks. Eine Messung der Ventilköpfe der Auslassventile 5, 5-1, 5-2 bewirkt somit einen eindeutigeren und somit besseren Zustandswechsel des jeweiligen Auslassventils 5, 5-1, 5-2. Auf diese Weise lässt sich auch genauer die Position des jeweiligen Ventilkopfes ermitteln.

Im Folgenden wird ein Ausführungsbeispiel des erfindungsgemäßen Verfahrens zum Erfassen des Fördervolumens und/oder des Förderstroms der diskontinuierlich arbeitenden Pumpe 1 erläutert:
Das Verfahren wird von der vorstehend beschriebenen Anordnung betrieben. Im Behälter 6 befindet sich ein bekanntes Fluidvolumen. Der Wert dieses Ausgangsfluidvolumens ist in dem Speicher 10 gespeichert. Die Pumpe 1 wird nun in Betrieb genommen. Dabei wird der Pendelkolben 13 hin und her bewegt und wechselweise Fluid aus dem Behälter 6 durch die Einlassleitung 2 in die erste Förderkammer 14-1 und in die zweite Förderkammer 14-2 durch die sich öffnenden Einlassventile 4-1 und 4-2 angesaugt. Während des Füllens der ersten Förderkammer 14-1 bei einer Bewegung des Pendelkolbens 13 von einer ersten Stellung in eine zweite Stellung wird das Fluid aus der zweiten Förderkammer 14-2 in die Auslassleitung 3 gepumpt. Dabei öffnet der Druck des Fluids das Auslassventil 5-2, indem der Ventilkopf 16-2 von dem Ventilsitz 15-2 gegen die von der Ventilfeder 17-2 ausgeübte Kraft weg bewegt wird. Der Wechsel der Stellung des Ventilkopfes 16-2 bzw. die genaue Position des Ventilkopfes 16-2 wird wie vorstehend beschrieben von dem Sensor 8-2 erfasst und an die Recheneinheit 9 übertragen.

Wenn nach einem Zyklus der Pendelkolben 13 in die andere Richtung bewegt wird und Fluid durch die zweite Einlassleitung 2-2 und das zweite Einlassventil 4-2 in die zweite Förderkammer 14-2 gesaugt wird, wird das in der ersten Förderkammer 14-1 befindliche Fluid in die Auslassleitung 3 gepumpt. Entsprechend wird der erste Ventilkopf 16-2 von dem Ventilsitz 15-1 weg bewegt. Diesen Stellungswechsel des ersten Ventilkopfes 16-1 bzw. die genaue Position des ersten Ventilkopfes 16-1 wird von dem Sensor 8-1 erfasst und an die Recheneinheit 9 übertragen. Diese berechnet anhand der in dem Speicher gespeicherten Daten, insbesondere der Kalibrierungsdaten, das von der Pumpe 1 geförderte Volumen und den momentanen Förderstrom der Pumpe. Diese Werte können von der Anzeigevorrichtung 11 angezeigt werden. Ferner kann anhand dieser Werte die Steuervorrichtung 7 die Pumpe 1 steuern.

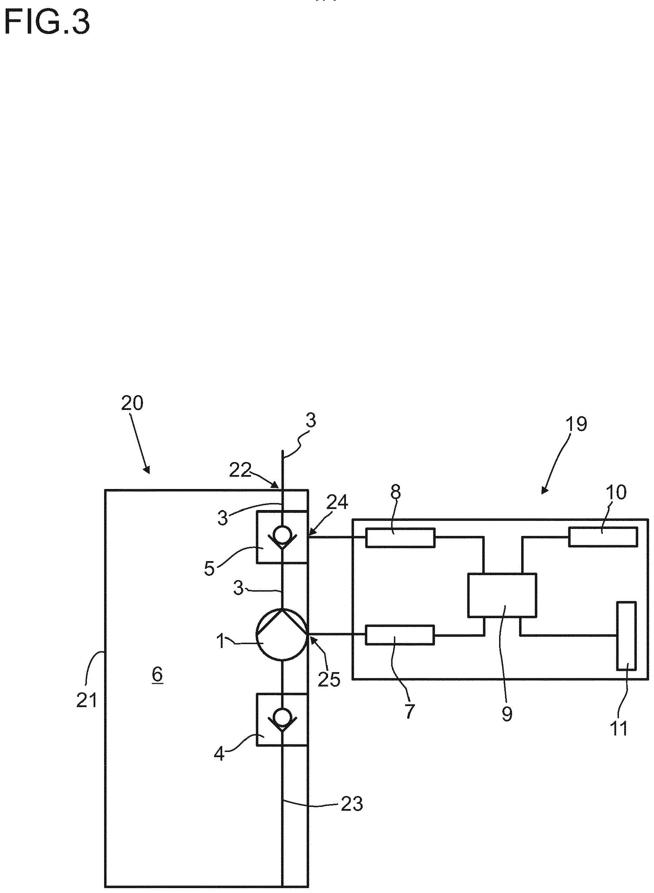

Im Folgenden wird mit Bezug zu Fig. 3 ein Ausführungsbeispiel des erfindungsgemäßen Entnahmesystems 20 und eines Verfahrens zum Dosieren eines Pflanzenschutzmittels erläutert, welche die vorstehend beschriebene Anordnung verwenden:
Das Entnahmesystem 20 ist in zwei Komponenten aufgeteilt. Die erste Komponente umfasst einen Behälter 6 zur Aufnahme eines Pflanzenschutzmittels. Der Behälter 6 weist eine Behälterwand 21 und eine Entnahmeöffnung 22 auf. Die Behälterwand 21 umschließt einen Innenraum, in welchem das Pflanzenschutzmittel aufgenommen wird.

Der Behälter 6 umfasst die diskontinuierlich arbeitende Pumpe 1. Die Pumpe 1 ist fest mit dem Behälter 6 verbunden, d. h. der Behälter und die Pumpe bilden eine Einheit.

Beispielsweise können, wie in Fig. 3 gezeigt, die diskontinuierlich arbeitende Pumpe 1 und die Ventile 4 und 5 im Innenraum des Behälters 6 angeordnet sein. Außerdem kann die Pumpe 1 von außen an dem Behälter 6 befestigt sein. Die Behälterwand 21 kann z. B. eine Aussparung bilden, in welche die Pumpe 1 von außen eingesetzt ist.

Die Einlassleitung 2 der vorstehend beschriebenen Anordnung ist bei dem Entnahmesystem 20 als Saugleitung 23 des Behälters 6 ausgebildet. Die Auslassleitung 3 wird durch die Entnahmeöffnung 22 des Behälters 6 durchgeführt. Wenn die Pumpe 1 von außen an dem Behälter 6 befestigt ist, wird die Einlassleitung 2 durch die Entnahmeöffnung 22 des Behälters 6 zu der Pumpe 1 geführt. Über die Auslassleitung 3 wird das Pflanzenschutzmittel entnommen und zum Beispiel einer Spritzpistole dosiert zugeführt. Der Behälter 6 bzw. die von dem Behälter 6 und der der Pumpe 1 gebildete Einheit weist einen ersten Anschluss 24 und einen zweiten Anschluss 25 auf. Über diese beiden Anschlüsse 24 und 25 wird eine externe Einheit 19 mit der ersten Komponente des Entnahmesystems 20 gekoppelt. Die externe Einheit 19 bildet somit die zweite Komponente.

Über den ersten Anschluss 24 wird der Sensor 8 mit dem Auslassventil 5 gekoppelt. Beispielsweise wird der Sensor 8, der beispielsweise als Abstandssensor oder Bewegungssensor ausgebildet sein kann, in eine definierte Position einer Öffnung des ersten Anschlusses 24 gebracht und dort arretiert. Auf diese Weise kann der Sensor 8 die Stellung und die Position oder die Bewegung des Ventilkopfes des Auslassventils 5 erfassen, wie es vorstehend mit Bezug zu Fig. 2 beschrieben wurde.

Bei dem zweiten Anschluss 25 ist die Pumpe 1 mit der Steuereinheit 7 gekoppelt. Beispielsweise kann es sich bei dem zweiten Anschluss 25 um einen elektrischen Anschluss handeln, über den die Steuervorrichtung 7 Steuersignale an die Pumpe 1 überträgt. Ferner ist es auch möglich, dass die Pumpe 1 in eine Fördereinheit und eine Antriebseinheit aufgeteilt ist. In diesem Fall kann die Fördereinheit innerhalb des Behälters 6 angeordnet sein und die Antriebseinheit in der externen Einheit 19 untergebracht sein. Über den zweiten Anschluss 25 kann dann eine mechanische Kraftübertragung an die Fördereinheit der Pumpe 1 erfolgen. Alternativ kann ein pneumatischer oder hydraulischer Antrieb an die Fördereinheit der Pumpe 1 übertragen werden.

Der Sensor 8 und die Steuervorrichtung 7 sind wie vorstehend beschrieben mit der Recheneinheit 9 verbunden, welche wiederum mit dem Speicher 10 und der Anzeigevorrichtung 11 verbunden ist.

Bei dem Entnahmesystem 20 wird eine Förderfehlfunktion auf die folgende Weise erfasst:
Mittels der in die Steuervorrichtung 7 integrierten Prüfeinrichtung wird überprüft, ob innerhalb eines definierten Zeitintervalls nach dem Ende eines Zyklus der Ventilkopf 16-1 bzw. 16-2 von der ersten Stellung in die zweite Stellung gewechselt hat. Nur in diesem Fall wurde von der Pumpe 1 Fluid, d. h. insbesondere Pflanzenschutzmittel, gefördert. Wenn ein solcher Wechsel der Stellung nicht erfasst worden ist, liegt eine Förderfehlfunktion vor. Diese Förderfehlfunktion kann verschiedene Gründe haben: Zum einen kann der Behälter 6 kein Fluid mehr enthalten. Um dies festzustellen, wird mittels der Recheneinheit 9 das Restvolumen des Fluids in dem Behälter 6 berechnet. Wenn das Restvolumen unterhalb eines definierten Grenzwerts liegt und die Förderfehlfunktion mittels der Prüfeinrichtung festgestellt worden ist, wird auf einen Leerstand des Behälters 6 geschlossen. Ein Hinweis auf diesen Leerstand wird dann von der Anzeigevorrichtung 11 ausgegeben.

Zum anderen kann sich die Förderfehlfunktion jedoch auch aus einer Fehlfunktion des Entnahmesystems 20, z. B. der Pumpe, ergeben. Wenn erfasst worden ist, dass das Restvolumen nicht unterhalb des definierten Grenzwerts liegt, dennoch jedoch eine Förderfehlfunktion erfasst worden ist, wird auf eine solche Fehlfunktion geschlossen. Ein Hinweis darauf kann mittels der Anzeigevorrichtung 11 ausgegeben werden.

Wenn ein Leerstand des Behälters 6 erfasst worden ist, wird die Pumpe 1 abgeschaltet. Nun kann der Behälter 6 manuell durch einen anderen, vollen Behälter ausgetauscht werden. Daraufhin kann erneut Fluid gefördert werden, wie es vorstehend beschrieben wurde.

Bei einem weiteren Ausführungsbeispiel des erfindungsgemäßen Entnahmesystems 20 und des Verfahrens zum Dosieren eines Pflanzenschutzmittels umfasst das Entnahmesystem 20 nicht nur einen Behälter 6, sondern mehrere Behälter 6, z. B. zwei der vorstehend beschriebenen Behälter 6. Jeder Behälter umfasst eine Pumpe 1. Die Auslassleitungen 3 der Behälter 6 sind in diesem Fall zusammengeführt.

Die externe Einheit 19 ist nun zunächst mit dem ersten Behälter 6 gekoppelt. Es wird dann das in dem ersten Behälter befindliche Fluid, d.h. das Pflanzenschutzmittel, entnommen.

Wenn ein Leerstand des Behälters 6 erfasst worden ist, wird die Pumpe 1 automatisch abgeschaltet und die externe Einheit 19 wird automatisch mit einem anderen, vollem Behälter 6 gekoppelt. Hierfür weist das Entnahmesystem 20 eine Wechseleinrichtung auf, mittels welcher automatisch die Kopplung des Sensors 8 mit dem ersten Anschluss 24 und die Kopplung der Steuervorrichtung 7 bzw. der Antriebseinheit mit dem zweiten Anschluss 25 von dem ersten Behälter gelöst und mit entsprechenden Anschlüssen 24 und 25 des anderen Behälters 6 gekoppelt werden. Alternativ sind bereits der Sensor 8 und die Steuervorrichtung 7 bzw. die Antriebseinheit mit den jeweiligen Anschlüssen 24 und 25 aller Behälter 6 des Entnahmesystems gekoppelt. Wenn dann ein Leerstand des ersten Behälters 6 erfasst worden, erfolgt nur eine Umschaltung auf den nächsten Behälter 6. Daraufhin wird erneut Fluid gefördert, wie es vorstehend beschrieben wurde. Der Wechsel zwischen den Behältern 6 erfolgt dabei im Wesentlichen ohne Verzögerung.

### Bezugszeichenliste

- 1: Pumpe, Kolbenpumpe, Pendelkolbenpumpe
- 2: Einlassleitung
- 2-1: erste Einlassleitung
- 2-2: zweite Einlassleitung
- 3: Auslassleitung
- 4: Einlassventil
- 4-1: erstes Einlassventil
- 4-2: zweites Einlassventil
- 5: Auslassventil
- 5-1: erstes Auslassventil
- 5-2: zweites Auslassventil
- 6: Behälter
- 7: Steuervorrichtung
- 8: Sensor
- 8-1: erster Sensor, erster Abstandssensor, erster Bewegungssensor
- 8-2: zweiter Sensor, zweiter Abstandssensor, zweiter Bewegungssensor
- 9: Recheneinheit
- 10: Speicher
- 11: Anzeigevorrichtung
- 12: Gehäuse
- 13: Pendelkolben
- 14-1: erste Förderkammer
- 14-2: zweite Förderkammer
- 15-1, 15-2: Ventilsitz
- 16-1, 16-2: Ventilkopf
- 17-1, 17-2: Ventilfeder
- 18-1, 18-2: Stellschraube
- 19: externe Einheit
- 20: Entnahmesystem
- 21: Behälterwand
- 22: Entnahmeöffnung
- 23: Saugleitung
- 24: erster Anschluss
- 25: zweiter Anschluss

## Patentansprüche

1. Anordnung zum Erfassen eines Fördervolumens und/oder eines Förderstroms mit
- einer diskontinuierlich arbeitenden Pumpe (1),
- zumindest einer Auslassleitung (3) und einer Einlassleitung (2, 2-1, 2-2) und
- einem passiven Ventil (5, 5-1, 5-2), das in der Auslassleitung (3) oder der Einlassleitung (2, 2-1, 2-2) angeordnet ist und das einen Ventilsitz (15-1, 15-2) und einen Ventilkopf (16-1, 16-2) aufweist, wobei in einer ersten Stellung des Ventilkopfes (16-1, 16-2) das Ventil (5, 5-1, 5-2) geschlossen und in einer zweiten Stellung des Ventilkopfes (16-1, 16-2) das Ventil (5, 5-1, 5-2) geöffnet ist,
- einem Sensor (8, 8-1, 8-2), mit dem Werte erfassbar sind, die angeben, ob sich der Ventilkopf (16-1, 16-2) in der ersten oder der zweiten Stellung befindet, und
- einer Recheneinheit (9), welche mit dem Sensor (8, 8-1, 8-2) gekoppelt ist und mit welcher das von der Pumpe (1) geförderte Volumen und/oder der Förderstrom der Pumpe (1) anhand der erfassten Werte des Sensors (8, 8-1, 8-2) berechenbar ist/sind,
- wobei die Pumpe (1) zyklisch arbeitet, bei jedem Zyklus ein definiertes Fluidvolumen von der Pumpe (1) gefördert wird, sich der Ventilkopf (16-1, 16-2) zwischen zwei Zyklen in der ersten Stellung befindet und mittels der Recheneinheit (9) und dem Sensor (8, 8-1, 8-2) erfassbar ist, wie häufig der Ventilkopf (16-1, 16-2) von der ersten in die zweite Stellung wechselt, und anhand der Anzahl der Wechsel von der ersten in die zweite Stellung das von der Pumpe (1) geförderte Volumen berechenbar ist, und mit
- einer Prüfeinrichtung zum Erfassen einer Förderfehlfunktion, die mit der Pumpe (1) und dem Sensor (8, 8-1, 8-2) gekoppelt ist und mit welcher prüfbar ist, ob innerhalb eines definierten Zeitintervalls nach dem Ende eines Zyklus der Ventilkopf (16-1, 16-2) von der ersten Stellung in die zweite Stellung gewechselt hat,
**dadurch gekennzeichnet,**
- **dass** die Recheneinheit (9) einen Speicher umfasst, in dem ein Ausgangsvolumen in einem mit der Einlassleitung (2, 2-1, 2-2) verbundenen Behälter (6) gespeichert ist, und
- **dass** die Recheneinheit (9) eingerichtet ist, ein Restvolumen in dem Behälter zu berechnen und
- die Prüfeinrichtung eingerichtet ist, zu prüfen, ob die Förderfehlfunktion eine Fehlfunktion der Pumpe (1) oder ein Leerstand des Behälters (6) ist.

2. Anordnung nach Anspruch 1,
**dadurch gekennzeichnet,**
**dass** mit dem Sensor (8, 8-1, 8-2) in der zweiten Stellung des Ventilkopfes (16-1, 16-2) die Position des Ventilkopfes (16-1, 16-2) relativ zum Ventilsitz (15-1, 15-2) erfassbar ist.

3. Anordnung nach Anspruch 2,
**dadurch gekennzeichnet,**
**dass** der Sensor (8, 8-1, 8-2) ein Abstandssensor ist, mit dem der Abstand des Ventilkopfes (16-1, 16-2) zu einem Bezugspunkt erfassbar ist.

4. Anordnung nach Anspruch 1,
**dadurch gekennzeichnet,**
**dass** der Sensor (8, 8-1, 8-2) ein Bewegungssensor ist, mit dem eine Bewegung des Ventilkopfes (16-1, 16-2) erfassbar ist.

5. Anordnung nach Anspruch 2 oder 3,
**dadurch gekennzeichnet,**
**dass** die Recheneinheit (9) mit dem Speicher oder einem weiteren Speicher (10) gekoppelt ist, in welchem Kalibrierungsdaten gespeichert sind, die den Förderstrom durch das Ventil (5, 5-1, 5-2) in Abhängigkeit von der Position des Ventilkopfes (16-1, 16-2) relativ zum Ventilsitz (15-1, 15-2) angeben, und dass mit der Recheneinheit (9) anhand der kontinuierlich vom Sensor (8, 8-1, 8-2) erfassten Position des Ventilkopfes (16-1, 16-2) und anhand der Kalibrierungsdaten das von der Pumpe (1) geförderte Volumen und/oder der Förderstrom der Pumpe (1) berechenbar ist/sind.

6. Anordnung nach Anspruch 1,
**dadurch gekennzeichnet,**
**dass** mittels der Recheneinheit (9) ein Hinweis auf einen Leerstand von einer Anzeigevorrichtung (11) anzeigbar ist, wenn das Restvolumen unterhalb einem definierten Grenzwert liegt.

7. Entnahmesystem (20) für ein Pflanzenschutzmittel mit
- einem Behälter (6), der eine Behälterwand (21) und eine Entnahmeöffnung (22) aufweist, wobei die Behälterwand (21) einen Innenraum zur Aufnahme des Pflanzenschutzmittels umschließt, und
- eine Anordnung nach einem der Ansprüche 1 bis 6, wobei
- die diskontinuierlich arbeitende Pumpe (1) so mit dem Behälter (6) gekoppelt ist, dass mittels der Einlassleitung (2, 23) der Pumpe (1) im Behälter (6) befindliches Pflanzenschutzmittel durch die Pumpe (1) zur Auslassleitung (3) der Pumpe (1) gefördert wird,
- der Sensor (8, 8-1, 8-2) und die Recheneinheit (9) in einer externen Einheit (19) angeordnet sind, und
- der Behälter (6) einen ersten Anschluss (24) für die Kopplung des Sensors (8) mit dem Ventil (5, 5-1, 5-2) der Pumpe (1) zum Erfassen der Stellung des Ventilkopfes (16-1, 16-2) aufweist.

8. Entnahmesystem (20) nach Anspruch 7,
**dadurch gekennzeichnet,**
**dass** die diskontinuierlich arbeitende Pumpe (1) so im Innenraum des Behälters (6) angeordnet ist, dass mittels der Einlassleitung (2, 23) der Pumpe (1) im Behälter (6) befindliches Pflanzenschutzmittel durch die Pumpe (1) über die Auslassleitung (3) der Pumpe (1) zur Entnahmeöffnung (22) des Behälters (6) gefördert wird.

9. Entnahmesystem (20) nach Anspruch 7,
**dadurch gekennzeichnet,**
**dass** die diskontinuierlich arbeitende Pumpe (1) außen an dem Behälter (6) befestigt ist.

10. Entnahmesystem (20) nach einem Ansprüche 7 bis 9,
**dadurch gekennzeichnet,**
**dass** Entnahmesystem (20) mehrere Behälter (6) und eine Wechseleinrichtung umfasst, wobei die Behälter (6) jeweils eine Pumpe (1) umfassen und wobei mittels der Wechseleinrichtung automatisch die Kopplung des Sensors (8) mit dem ersten Anschluss (24) von dem ersten Behälter lösbar und mit dem ersten Anschluss (24) eines weiteren Behälters (6) koppelbar ist.

11. Verfahren zum Dosieren eines Pflanzenschutzmittels, bei dem das Pflanzenschutzmittel mittels einer diskontinuierlich und zyklisch arbeitenden Pumpe gefördert wird und das Fördervolumen und/oder der Förderstrom der Pumpe (1) erfasst wird, bei dem
ein Pumpenelement (13) angetrieben wird, wodurch das Pflanzenschutzmittel aus einem Behälter (6) heraus gefördert wird, wobei das geförderte Pflanzenschutzmittel ein passives Ventil (5, 5-1, 5-2), das in einer Auslassleitung (3) und/oder einer Einlassleitung (2) angeordnet ist, gegen eine Öffnungskraft des Ventils (5, 5-1, 5-2) öffnet, indem ein Ventilkopf (16-1, 16-2) relativ zu einem Ventilsitz (15-1, 15-2) von einer ersten Stellung in eine zweite Stellung bewegt wird,
von der Pumpe (1) bei jedem Zyklus ein definiertes Pflanzenschutzmittelvolumen gefördert wird, wobei sich der Ventilkopf (16-1, 16-2) zwischen zwei Zyklen in der ersten Stellung befindet, bei der das Ventil (5, 5-1, 5-2) geschlossen ist, wobei erfasst wird, wie häufig der Ventilkopf (16-1, 16-2) von der ersten Stellung in die zweite Stellung wechselt, und das von der Pumpe (1) geförderte Volumen anhand der Anzahl der Wechsel von der ersten in die zweite Stellung berechnet wird,
**dadurch gekennzeichnet,**
**dass** geprüft wird, ob innerhalb eines definierten Zeitintervalls nach dem Ende eines Zyklus der Ventilkopf (16-1, 16-2) von der ersten Stellung in die zweite Stellung gewechselt hat, und eine Förderfehlfunktion erfasst wird, wenn innerhalb des Zeitintervalls nach dem Ende eines Zyklus der Ventilkopf (16-1, 16-2) nicht von der ersten Stellung in die zweite Stellung gewechselt hat,
**dass** das Ausgangsvolumen des Pflanzenschutzmittels in einem Behälter erfasst wird und
**dass** das Restvolumen des Pflanzenschutzmittels in dem Behälter (6) berechnet wird und geprüft wird, ob die Förderfehlfunktion eine Fehlfunktion der Pumpe (1) oder ein Leerstand des Behälters (6) ist.

12. Verfahren nach Anspruch 11,
**dadurch gekennzeichnet,**
**dass** in der zweiten Stellung des Ventilkopfes (16-1, 16-2) die Position des Ventilkopfes (16-1, 16-2) relativ zum Ventilsitz (15-1, 15-2) erfasst wird.

13. Verfahren nach Anspruch 12,
**dadurch gekennzeichnet,**
**dass** das von der Pumpe (1) geförderte Volumen und/oder der Förderstrom der Pumpe (1) anhand von Kalibrierungsdaten, die den Förderstrom durch das Ventil (5, 5-1, 5-2) in Abhängigkeit von der Position des Ventilkopfes (16-1, 16-2) relativ zum Ventilsitz (15-1, 15-2) angeben, und anhand der kontinuierlich erfassten Position des Ventilkopfes (16-1, 16-2) berechnet wird.

14. Verfahren nach Anspruch 11,
**dadurch gekennzeichnet,**
**dass** ein Hinweis auf einen Leerstand des Behälters (6) ausgegeben wird, wenn das Restvolumen unterhalb einem definierten Grenzwert liegt und eine Förderfehlfunktion erfasst worden ist.

15. Verfahren nach Anspruch 11 oder 14,
**dadurch gekennzeichnet,**
**dass** ein Hinweis auf eine Fehlfunktion ausgegeben wird, wenn das Restvolumen nicht unterhalb dem definierten Grenzwert liegt und eine Förderfehlfunktion erfasst worden ist.

## Claims

1. An arrangement for detecting a delivery volume and/or a delivery flow, with
- a discontinuously operating pump (1),
- at least one outlet line (3) and one inlet line (2, 2-1, 2-2) and
- a passive valve (5, 5-1, 5-2), which is arranged in the outlet line (3) or the inlet line (2, 2-1, 2-2) and which has a valve seat (15-1, 15-2) and a valve head (16-1, 16-2), the valve (5, 5-1, 5-2) being closed in a first position of the valve head (16-1, 16-2) and the valve (5, 5-1, 5-2) being open in a second position of the valve head (16-1, 16-2),
- a sensor (8, 8-1, 8-2), by means of which values can be detected which indicate whether the valve head (16-1, 16-2) is in the first or the second position, and
- a computing unit (9), which is coupled to the sensor (8, 8-1, 8-2) and by means of which the volume delivered by the pump (1) and/or the delivery flow of the pump (1) can be calculated on the basis of the detected values of the sensor (8, 8-1, 8-2).
- where the pump (1) operates cyclically, a defined fluid volume is delivered by the pump (1) during each cycle, the valve head (16-1, 16-2) is in the first position between two cycles and it can be detected by means of the computing unit (9) and the sensor (8, 8-1, 8-2) how frequently the valve head (16-1, 16-2) changes from the first position to the second, and the volume delivered by the pump (1) can be calculated on the basis of the number of changes from the first position to the second, and with
- a test device for detecting a delivery malfunction which is coupled to the pump (1) and to the sensor (8, 8-1, 8-2) and by way of which it is possible to test whether the valve head (16-1, 16-2) has changed from the first position to the second position within a defined time interval after the end of a cycle,
**wherein**
- the computing unit (9) comprises a memory in which there is stored an initial volume in a container (6) connected to the inlet (2, 2-1, 2-2), and
- the computing unit (9) is set up to calculate a remaining volume in the container and
- the test device is set up to test whether the delivery malfunction is a malfunction of the pump (1) or an empty state of the container (6).

2. The arrangement according to claim 1,
**wherein,**
the position of the valve head (16-1, 16-2) in relation to the valve seat (15-1, 15-2) in the second position of the valve head (16-1, 16-2) can be detected by means of the sensor (8, 8-1, 8-2).

3. The arrangement according to claim 2,
**wherein,**
the sensor (8, 8-1, 8-2) is a distance sensor, by means of which the distance of the valve head (16-1, 16-2) from a reference point can be detected.

4. The arrangement according to claim 1,
**wherein**
the sensor (8, 8-1, 8-2) is a motion sensor by way of which a movement of the valve head (16-1, 16-2) is detectable.

5. The arrangement according to claim 2 or 3,
**wherein,**
the computing unit (9) is coupled to the memory or to a further memory (10) which stores calibration data which indicate the delivery flow through the valve (5, 5-1, 5-2) as a function of the position of the valve head (16-1, 16-2) in relation to the valve seat (15-1, 15-2), and wherein the volume delivered by the pump (1) and/or the delivery flow of the pump (1) can be calculated by the computing unit (9) on the basis of the position, continuously detected by the sensor (8, 8-1, 8-2), of the valve head (16-1, 16-2) and on the basis of the calibration data.

6. The arrangement according to claim 1,
**wherein,**
by means of the computing unit (9), an indication of an empty state can be indicated by an indicator device (11) when the remaining volume is below a defined limit value.

7. An extraction system (20) for a plant protective, with
- a container (6), which has a container wall (21) and an extraction orifice (22), the container wall (21) surrounding an inner space for receiving the plant protective, and
- an arrangement according to one of claims 1 to 6,
- the discontinuously operating pump (1) being coupled to the container (6) such that plant protective located in the container (6) is delivered by means of the inlet line (2, 23) of the pump (1) through the pump (1) to the outlet line (3) of the pump (1),
- the sensor (8, 8-1, 8-2) and the computing unit (9) being arranged in an external unit (19), and
- the container (6) having a first connection (24) for coupling the sensor (8) to the valve (5, 5-1, 5-2) of the pump (1) for the purpose of detecting the position of the valve head (16-1, 16-2).

8. The extraction system (20) according to claim 7,
**wherein,**
the discontinuously operating pump (1) being arranged in the inner space of the container (6) such that plant protective located in the container (6) is delivered by means of the inlet line (2, 23) of the pump (1) through the pump (1) via the outlet line (3) of the pump (1) to the extraction orifice (22) of the container (6).

9. The extraction system (20) according to claim 7,
**wherein**
the discontinuously operating pump (1) is fastened to the outside of the container (6).

10. The extraction system (20) according to one of claims 7 to 9,
**wherein**
the extraction system (20) comprises a plurality of containers (6) and a changing device, the containers (6) each comprising a pump (1) and it being possible, by means of the changing device, for the coupling of the sensor (8) with the first connection (24) to be released from the first container and to be coupled with the first connection (24) of a further container (6).

11. A method for metering a plant protective, in which the plant protective is delivered by means of a discontinuously and cyclically operating pump and the delivery volume and/or the delivery flow of the pump (1) are/is detected, in which
a pump element (13) is driven, with the result that the plant protective is delivered from a container (6), the delivered plant protective opening a passive valve (5, 5-1, 5-2), arranged in an outlet line (3) and/or an inlet line (2), counter to an opening force of the valve (5, 5-1, 5-2), in that a valve head (16-1, 16-2) is moved in relation to a valve seat (15-1, 15-2) from a first position into a second position,
a defined plant protective volume is delivered by the pump (1) during each cycle, the valve head (16-1, 16-2) being in the first position, in which the valve (5, 5-1, 5-2) is closed, between two cycles, it being detected how frequently the valve head (16-1, 16-2) changes from the first position to the second position, and the volume delivered by the pump (1) being calculated on the basis of the number of changes from the first position to the second,
**wherein**
it is tested whether the valve head (16-1, 16-2) has changed from the first position to the second position within a defined time interval after the end of a cycle, and a delivery malfunction is detected if the valve head (16-1, 16-2) has not changed from the first position to the second position within the time interval after the end of a cycle,
wherein the initial volume of the plant protective in a container is detected, and
wherein the remaining volume of the plant protective in the container (6) is calculated and it is tested whether the delivery malfunction is a malfunction of the pump (1) or an empty state of the container (6).

12. The method according to claim 11,
**wherein,**
in the second position of the valve head (16-1, 16-2) the position of the valve head (16-1, 16-2) in relation to the valve seat (15-1, 15-2) is detected.

13. The method according to claim 12,
**wherein,**
the volume delivered by the pump (1) and/or the delivery flow of the pump (1) are/is calculated on the basis of calibration data, which indicate the delivery flow through the valve (5, 5-1, 5-2) as a function of the position of the valve head (16-1, 16-2) in relation to the valve seat (15-1, 15-2), and on the basis of the continuously detected position of the valve head (16-1, 16-2).

14. The method according to claim 11,
**wherein**
an indication of an empty state of the container (6) is output when the remaining volume is below a defined limit value and a delivery malfunction has been detected.

15. The method according to claim 11 or 14,
**wherein**
an indication of a malfunction is output when the remaining volume is not below the defined limit value and a delivery malfunction has been detected.

## Revendications

1. Assemblage pour détecter un volume de refoulement et/ou un débit, avec
- une pompe à mouvement alternatif (1),
- au moins une conduite de sortie (3) et une conduite d'entrée (2, 2-1, 2-2) et
- une soupape passive (5, 5-1, 5-2), qui est disposée dans la conduite de sortie (3) ou dans la conduite d'entrée (2, 2-1, 2-2) et qui présente un siège de soupape (15-1, 15-2) et une tête de soupape (16-1, 16-2), dans lequel dans une première position de la tête de soupape (16-1, 16-2) la soupape (5, 5-1, 5-2) est fermée et dans une deuxième position de la tête de soupape (16-1, 16-2) la soupape (5, 5-1, 5-2) est ouverte,
- un capteur (8, 8-1, 8-2), avec lequel on peut détecter des valeurs, qui indiquent si la tête de soupape (16-1, 16-2) se trouve dans la première ou dans la deuxième position, et
- une unité de calcul (9), qui est couplée au capteur (8, 8-1, 8-2) et avec laquelle il est possible de calculer, à partir des valeurs détectées du capteur (8, 8-1, 8-2), le volume refoulé par la pompe (1) et/ou le débit de la pompe (1),
- dans lequel la pompe (1) travaille de manière cyclique, un volume de fluide défini est refoulé par la pompe (1) à chaque cycle, la tête de soupape (16-1, 16-2) se trouve dans la première position entre deux cycles et on peut détecter au moyen de l'unité de calcul (9) et du capteur (8, 8-1, 8-2) à quelle fréquence la tête de soupape (16-1, 16-2) passe de la première à la deuxième position, et on peut calculer à l'aide du nombre de passages de la première à la deuxième position le volume refoulé par la pompe (1), et avec
- un dispositif de contrôle pour détecter un fonctionnement de refoulement défectueux, qui est couplé à la pompe (1) et au capteur (8, 8-1, 8-2) et avec lequel on peut contrôler si la tête de soupape (16-1, 16-2) est passée de la première à la deuxième position à l'intérieur d'un intervalle de temps défini après la fin d'un cycle,
**caractérisé en ce que**
- l'unité de calcul (9) comprend une mémoire, dans laquelle est stocké un volume initial dans un réservoir (6) raccordé à la conduite d'entrée (2, 2-1, 2-2),
- l'unité de calcul (9) est configurée pour calculer un volume résiduel dans le réservoir (6), et
- le dispositif de contrôle est configuré pour contrôler si le fonctionnement de refoulement défectueux est un fonctionnement défectueux de la pompe (1) ou si le réservoir (6) est vide.

2. Assemblage selon la revendication 1, **caractérisé en ce que** dans la deuxième position de la tête de soupape (16-1, 16-2), la position de la tête de soupape (16-1, 16-2) par rapport au siège de soupape (15-1, 15-2) peut être détectée avec le capteur (8, 8-1, 8-2).

3. Assemblage selon la revendication 2, **caractérisé en ce que** le capteur (8, 8-1, 8-2) est un capteur de distance, avec lequel la distance de la tête de soupape (16-1, 16-2) par rapport à un point de référence peut être détectée.

4. Assemblage selon la revendication 1, **caractérisé en ce que** le capteur (8, 8-1, 8-2) est un détecteur de mouvement, avec lequel un mouvement de la tête de soupape (16-1, 16-2) peut être détecté.

5. Assemblage selon la revendication 2 ou 3, **caractérisé en ce que** l'unité de calcul (9) est couplée à la mémoire ou à une autre mémoire (10), dans laquelle sont stockées des données de calibrage, qui indiquent le débit à travers la soupape (5, 5-1, 5-2) en fonction de la position de la tête de soupape (16-1, 16-2) par rapport au siège de soupape (15-1, 15-2), et **en ce que** le volume refoulé par la pompe (1) et/ou le débit de la pompe (1) peut/peuvent être calculé(s) avec l'unité de calcul (9) à l'aide de la position de la tête de soupape (16-1, 16-2) détectée en continu par le capteur (8, 8-1, 8-2) et à l'aide des données de calibrage.

6. Assemblage selon la revendication 1, **caractérisé en ce qu'**une indication d'un état vide peut être affichée par un dispositif d'affichage (11) au moyen de l'unité de calcul (9), lorsque le volume résiduel se situe en dessous d'une valeur limite définie.

7. Système de prélèvement (20) pour un produit phytosanitaire, avec
- un réservoir (6), qui présente une paroi de réservoir (21) et un orifice de prélèvement (22), dans lequel la paroi de réservoir (21) entoure un espace intérieur destiné à contenir un produit phytosanitaire, et
- un assemblage selon l'une quelconque des revendications 1 à 6, dans lequel
- la pompe à mouvement alternatif (1) est couplée au réservoir (6), de telle manière que du produit phytosanitaire se trouvant dans le réservoir (6) soit refoulé au moyen de la conduite d'entrée (2, 23) de la pompe (1) à travers la pompe (1) vers la conduite de sortie (3) de la pompe (1),
- le capteur (8, 8-1, 8-2) et l'unité de calcul (9) sont disposés dans une unité externe (19), et
- le réservoir (6) présente un premier raccord (24) pour le couplage du capteur (8) avec la soupape (5, 5-1, 5-2) de la pompe (1) afin de détecter la position de la tête de soupape (16-1, 16-2).

8. Système de prélèvement (20) selon la revendication 7, **caractérisé en ce que** la pompe à mouvement alternatif (1) est disposée dans l'espace intérieur du réservoir (6), de telle manière que du produit phytosanitaire se trouvant dans le réservoir (6) soit refoulé au moyen de la conduite d'entrée (2, 23) de la pompe (1) à travers la pompe (1) via la conduite de sortie (3) de la pompe (1) jusqu'à l'orifice de prélèvement (22) du réservoir (6).

9. Système de prélèvement (20) selon la revendication 7, **caractérisé en ce que** la pompe à mouvement alternatif (1) est fixée extérieurement au réservoir (6).

10. Système de prélèvement (20) selon l'une quelconque des revendications 7 à 9, **caractérisé en ce que** le système de prélèvement (20) comprend plusieurs réservoirs (6) et un système de changement, dans lequel les réservoirs (6) comprennent chacun une pompe (1) et dans lequel le couplage du capteur (8) avec le premier raccord (24) peut être automatiquement déconnecté du premier réservoir et couplé au premier raccord (24) d'un autre réservoir (6) par le système de changement.

11. Procédé de dosage d'un produit phytosanitaire, dans lequel le produit phytosanitaire est refoulé au moyen d'une pompe travaillant de façon discontinue et cyclique et on détecte le volume de refoulement et/ou le débit de la pompe (1), dans lequel
on entraîne un élément de pompe (13), par lequel le produit phytosanitaire est refoulé hors d'un réservoir (6), dans lequel le produit phytosanitaire refoulé ouvre une soupape passive (5, 5-1, 5-2), qui est disposée dans une conduite de sortie (3) et/ou dans une conduite d'entrée (2), contre une force d'ouverture de la soupape (5, 5-1, 5-2), par le fait qu'une tête de soupape (16-1, 16-2) est déplacée d'une première position à une deuxième position par rapport à un siège de soupape (15-1, 15-2),
un volume défini de produit phytosanitaire est refoulé par la pompe (1) lors de chaque cycle, dans lequel la tête de soupape (16-1, 16-2) se trouve entre deux cycles dans la première position, pour laquelle la soupape (5, 5-1, 5-2) est fermée, dans lequel on détecte à quelle fréquence la tête de soupape (16-1, 16-2) passe de la première position à la deuxième position, et on calcule le volume refoulé par la pompe (1) à l'aide du nombre de passages de la pompe (1) de la première à la deuxième position,
**caractérisé en ce que**
on contrôle si la tête de soupape (16-1, 16-2) est passée de la première à la deuxième position à l'intérieur d'un intervalle de temps défini après la fin d'un cycle, et on détecte un fonctionnement de refoulement défectueux, lorsque la tête de soupape (16-1, 16-2) n'est pas passée de la première à la deuxième position à l'intérieur de l'intervalle de temps défini après la fin d'un cycle,
on détecte le volume initial du produit phytosanitaire dans un réservoir (6), et
on calcule le volume résiduel du produit phytosanitaire dans le réservoir (6) et on contrôle si le fonctionnement de refoulement défectueux est un fonctionnement défectueux de la pompe (1) ou si le réservoir (6) est vide.

12. Procédé selon la revendication 11, **caractérisé en ce que** l'on détecte la position de la tête de soupape (16-1, 16-2) par rapport au siège de soupape (15-1, 15-2) dans la deuxième position de la tête de soupape (16-1, 16-2).

13. Procédé selon la revendication 12, **caractérisé en ce que** l'on calcule le volume refoulé par la pompe (1) et/ou le débit de la pompe (1) à l'aide de données de calibrage, qui indiquent le débit à travers la soupape (5, 5-1, 5-2) en fonction de la position de la tête de soupape (16-1, 16-2) par rapport au siège de soupape (15-1, 15-2), et à l'aide de la position de la tête de soupape (16-1, 16-2) détectée en continu.

14. Procédé selon la revendication 11, **caractérisé en ce que** l'on produit une information indiquant que le réservoir (6) est vide, lorsque le volume résiduel se situe en dessous d'une valeur limite définie et qu'un fonctionnement de refoulement défectueux a été détecté.

15. Procédé selon la revendication 11 ou 14, **caractérisé en ce que** l'on produit une information indiquant un fonctionnement défectueux, lorsque le volume résiduel ne se situe pas en dessous de la valeur limite définie et qu'un fonctionnement de refoulement défectueux a été détecté.
